# EUROPEAN PATENT APPLICATION

(11) **EP 4 717 385 A1**
(43) Date of publication of application: **01.04.2026**
(21) Application number: 24203565.7
(22) Date of filing: 30.09.2024
(51) Int. Cl.: B23C 5/06, B23C 5/10, B23C 5/22

(54) **A MILLING TOOL BODY AND A MILLING TOOL**

(71) Applicant: AB Sandvik Coromant, 811 81 Sandviken (SE)
(72) Inventor: Roman, Stefan, Sandviken (SE); Eriksson, Thomas, Sandivken (SE); Olofsson, Mats, Sandviken (SE); Nygårds, Emma, Sandviken (SE)
(74) Representative: Sandvik

(57) **Abstract**

The invention relates to a tool body (1a) for a milling tool. The tool body (1a) including at least one pocket (5) for receiving a cutting insert. The pocket (5) comprises a bottom section (7) with a bottom support surface (8), a first side wall section (9) at a radial inner end (7d) of the bottom section (7) and a second side wall section (11) at an axial rear end (7b) of the bottom section (7). The first side wall section (9) comprises a radial support surface (10) extending in a first plane (P1) and the second wall surface (11) comprises an axial support surface (12) extending in a second plane (P2). In a plane extending in parallel with the bottom support surface (8), the first plane (P1) forms an angle a1 of 65-75° with the second plane (P2). The invention further relates to a milling tool comprising such a tool body.

## Description

### TECHNICAL FIELD OF THE INVENTION

The present invention relates to a tool body for a milling tool according to the preamble of claim 1. The invention also relates to a milling tool according to claim 15.

Hence, the invention relates to tool bodies for milling tools with one or more exchangeable cutting inserts each detachably mounted in an insert seat or pocket in the tool body, most commonly by a clamping element such as a clamping screw.

Such a milling tool is typically attached to a Computer Numerical Control (CNC) machine by a rear shank end of the tool body and operated by said machine to rotate and by that cut chips from a workpiece by at least one active cutting edge of the at least one cutting insert arranged in the pocket at a front cutting end of the tool body.

### BACKGROUND OF THE INVENTION AND PRIOR ART

This type of milling tools have many advantages over milling tools with solid tool bodies, i.e. with cutting edges formed in one piece with the tool body, such as increased tool life due to the fact that there is less wear on the tool body itself, but mainly the inserts are worn which are then replaced with new ones, reduced lead time during a cutting operation as a worn underperforming cutting edge may quickly be replaced instead of re-grinded, and increased versatility obtained by the possibility to provide one and the same tool body with different kinds of cutting inserts suitable for different machining operations, to mention a few examples.

While this type of milling tools offer certain advantages, they also present a set of challenges, primarily due to their more complex structure with a higher number of individual components compared to solid milling tools. For these tools to perform optimally, it is essential that the cutting inserts are precisely positioned and remain stable throughout an entire cutting operation.

The characteristics of the tool should be preserved as much as possible during a cutting operation. This includes maintaining its properties under various conditions such as exposure to cutting forces varying depending on cutting depth and cutting speed, vibrations, and other operational stresses. Moreover, the tool should retain a high performance even after some degree of wear on both the insert and the tool body. These are just a few of many aspects having impact on the performance of a milling tool of this type.

A significant number of these challenges are associated with and influenced by the interface between a pocket in the tool body and a cutting insert arranged therein, and more specifically by the design and characteristics of the bottom, radial and axial support surfaces of the pocket configured to provide support for support surfaces of a cutting insert associated therewith. There is a wide variety of pocket interface designs at milling tools of this type already known and on the market today, each having different impacts on the aforementioned challenges.

There is a continuous strive to improve the arrangement of cutting inserts in the pockets of this type of milling tools. This includes considering the parameters or aspects mentioned above and finding ways to optimize them for better performance.

### SUMMARY OF THE INVENTION

The object of the present invention is to provide a tool body for a milling tool of the type defined in the introduction, which tool body is being improved in at least some aspect with respect to such tool bodies already known, especially providing improved fixation and stability for a cutting insert when received in the pocket of the tool body.

This object is according to the invention obtained by providing such a tool body by which the first plane forms an angle a1 with the second plane of 65-75°. Such an angular relationship between the radial and axial support surfaces implies a self-securing effect on a cutting insert received in the pocket, which enhances the stability of the cutting insert and enables higher cutting speeds without unwanted movement of the cutting insert in the pocket which would deteriorate cutting performance and tool life.

According to an embodiment of the invention the first plane forms an angle a1 with the second plane of 68-72°. This angular relationship between the radial and axial support surfaces has proven to provide exceptional results with respect to the self-securing effect on the cutting insert, while maintaining a strong pocket design which is also not too complicated to produce.

According to another embodiment of the invention, in a plane extending in parallel with the bottom support surface and in which the central longitudinal axis of the tool body is projected orthogonally, the first plane is non-parallel with the projection of the central longitudinal axis.

According to another embodiment of the invention, in said plane extending in parallel with the bottom support surface and in which the central longitudinal axis of the tool body is projected orthogonally, the first plane forms an angle a2 with the projection of the central longitudinal axis and is located such that the shortest distance between the first plane and the projection of the central longitudinal axis of the tool body in said plane decreases along the projection of the central longitudinal axis in a direction from the rear towards the front end of the tool body, wherein a2 is 1-4°, preferably 1-2°.

According to another embodiment of the invention, in a plane extending in parallel with the bottom support surface and in which the central longitudinal axis of the tool body is projected orthogonally, the second plane forms an angle a3 with the projection of the central longitudinal axis, wherein a1-5°≤a3<a1.

According to another embodiment of the invention a1-3°≤a3<a1.

According to another embodiment of the invention the first side wall section has a front end and an opposite rear end, located at a front end and a rear end of the bottom section, respectively, as seen in the direction of longitudinal extension of the tool body, wherein a front end of the radial support surface is arranged at the front end of the first side wall section.

According to another embodiment of the invention the radial support surface continuously stretches over at least 60%, preferably at least 70%, of the entire length of the first side wall section, measured between the front and rear ends thereof.

According to another embodiment of the invention the second side wall section has an inner end by which it is connected to the rear end of the first side wall section, and an opposite outer end located closer to a peripheral surface of the tool body than the inner end, wherein the inner end and outer end of the second side wall section is located at an inner end and an outer end of the bottom section, respectively, as seen in a radial direction of the tool body transversely to the central axis, wherein an outer end of the axial support surface is arranged at the outer end of the second side wall section.

According to another embodiment of the invention the axial support surface stretches over less than 30%, preferably less than 25%, of the entire length of the second side wall section, measured between the outer and inner ends thereof.

According to another embodiment of the invention the second side wall section further comprises a part recessed into the tool body in a rearward direction relative to the axial support surface, as seen in the direction of longitudinal extension of the tool body, wherein the recessed part extends, from the inner end of the second side wall section towards the outer end of the second side wall section, over at least 60%, preferably at least 70%, even more preferred at least 75% of the entire length of the second side wall section, measured between the outer and inner ends thereof.

According to another embodiment of the invention, in a side view of the pocket along the bottom support surface and towards the first side wall section the bottom support surface forms an angle a4 of 5-15°, preferably 8-12°, with the central longitudinal axis of the tool body, such that the shortest distance between the bottom support surface and the central longitudinal axis of the tool body decreases along the bottom support surface, from a rear end towards a front end thereof, as seen in the direction of longitudinal extension of the tool body.

According to another embodiment of the invention the tool body is a tool body for a square shoulder milling tool.

According to another embodiment of the invention the at least one pocket defines a mainly parallelepipedic space.

According to another embodiment of the invention the at least one pocket is arranged in the front end of the tool body.

According to another embodiment of the invention the tool body includes a plurality of pockets.

The present invention also relates to a milling tool comprising a tool body according to any of the above-mentioned embodiments, as well as a cutting insert detachably mounted in a pocket of the tool body. Advantages and advantageous features of such a milling tool is clear from the above and following discussion of a tool body according to the invention.

### BRIEF DESCRIPTION OF THE DRAWINGS

Hereinafter follows a detailed description of embodiments of the invention cited as examples, with reference to the appended drawings.

In the drawings:
- Fig. 1: is a perspective view of a tool body according to an embodiment of the invention, with two pockets,
- Fig. 2: is a top view straight towards the bottom support surface of a pocket of the tool body in Fig. 1,
- Fig. 3: is a detail front view of the pocket shown in Fig. 2, straight towards the second side wall section of the pocket and slightly from above,
- Fig. 4: is a detail side-elevation view of the pocket shown in Fig. 2, straight towards the first side wall section of the pocket,
- Fig. 5: is a view showing the tool body in Fig. 1 with cutting inserts detachably mounted in the pockets thereof, so as to together form a milling tool, and
- Fig. 6: is a perspective view of a tool body according to another embodiment of the invention, with five pockets.

### DETAILED DESCRIPTION OF EMBODIMENTS OF THE INVENTION

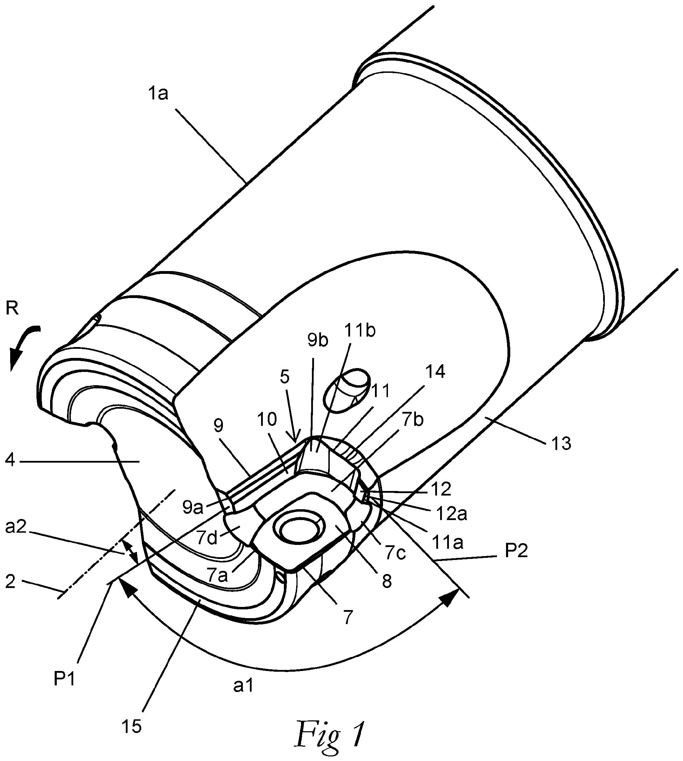

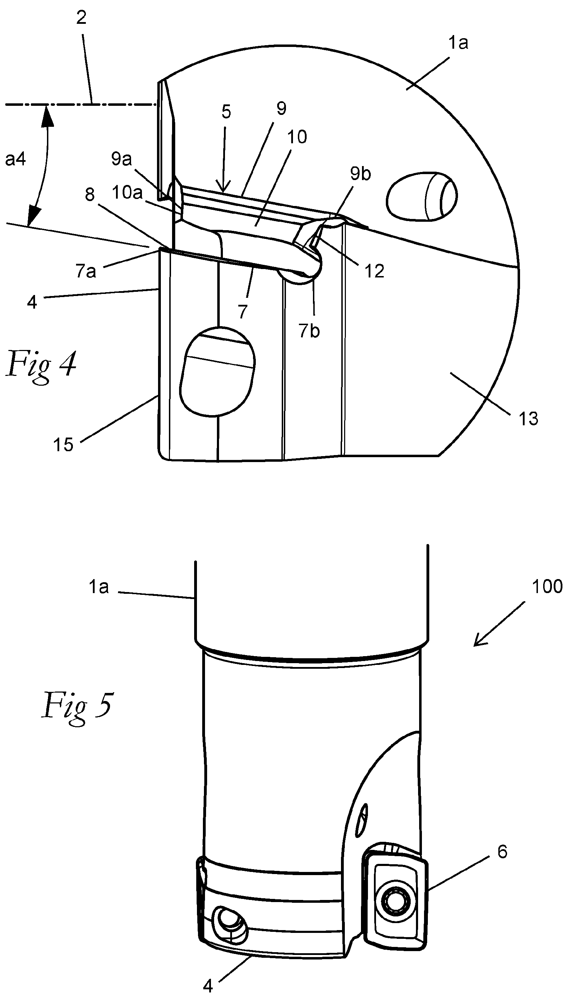

A tool body 1a according to one embodiment of the present invention is illustrated in Figs. 1-5 and will now be described while at the same time making reference to all these drawings. More specifically, Figs. 1-4 show the tool body 1a or selected parts thereof individually and in Fig. 5 the tool body 1a is shown provided with cutting inserts 6, so as to together form a milling tool 100 according to the invention, and more specifically a square shoulder milling tool.

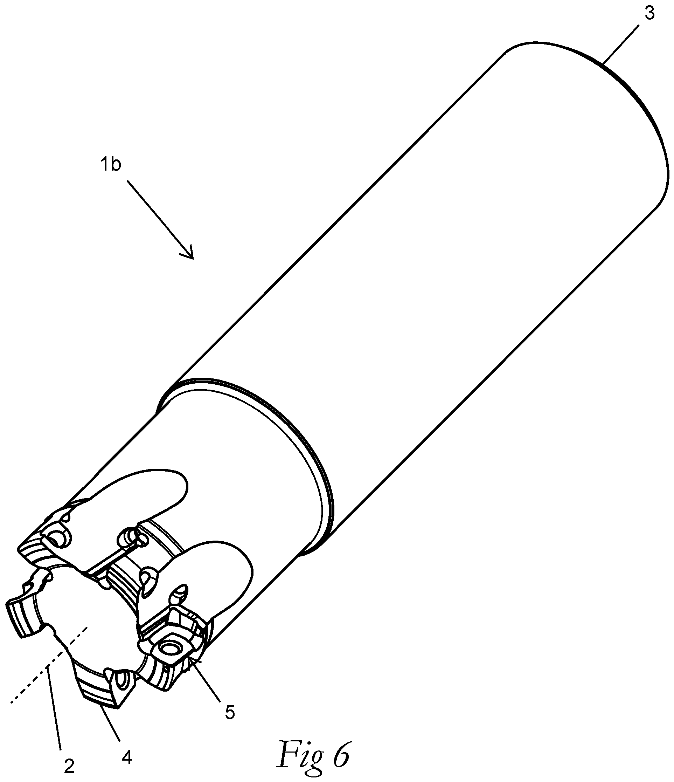

Moreover, a tool body 1b according to another embodiment of the invention is shown in Fig. 6. The tool body 1b according to this second embodiment is essentially the same as that of the first in design and function. The differences are merely that the tool bodies 1a, 1b shown have different dimensions and number of pockets to be provided with cutting inserts. For this reason the tool body 1b according to the second embodiment will not be described in detail, but is shown in exemplary purpose and a tool body according to the invention may just as well be provided with another number of pockets than those shown.

The tool body 1a has a circular cylindrical shape with a rear shank end 3 configured for attachment to a machine, such as a CNC-machine, and an opposite front cutting end 4. A longitudinal extension of the tool body 1a is measured from the rear shank end 3 to the front cutting end 4 and is at the tool body 1a shown defined by a central longitudinal axis 2 extending between the rear end and the front end and coinciding with the axis of rotation of a milling tool 100 by which the tool body 1a of the invention constitutes a part. Hence, an axial direction of the tool body 1a and milling tool is the same as a longitudinal direction thereof.

The tool body 1a including in the front end 4 thereof at least one, in this embodiment two identical pockets 5, each configured to receive a cutting insert 6, of which only one pocket is shown in detail and will be described here.

The pocket 5 comprises a bottom section 7 comprising a bottom support surface 8 arranged to face in a direction of intended rotation R of the milling tool 100 around the central longitudinal axis 2 of the tool body 1a. This does not mean that a plane in which the bottom support surface 8 extends have to have an extension which is exactly perpendicular to the direction of rotation of the milling tool, but that the pocket 5 is arranged to accommodate a radial cutting insert 6, which has a top surface serving as a rake face facing in the direction of rotation of the tool when an opposite bottom surface of the cutting insert is positioned against the bottom support surface 8 of the pocket 5.

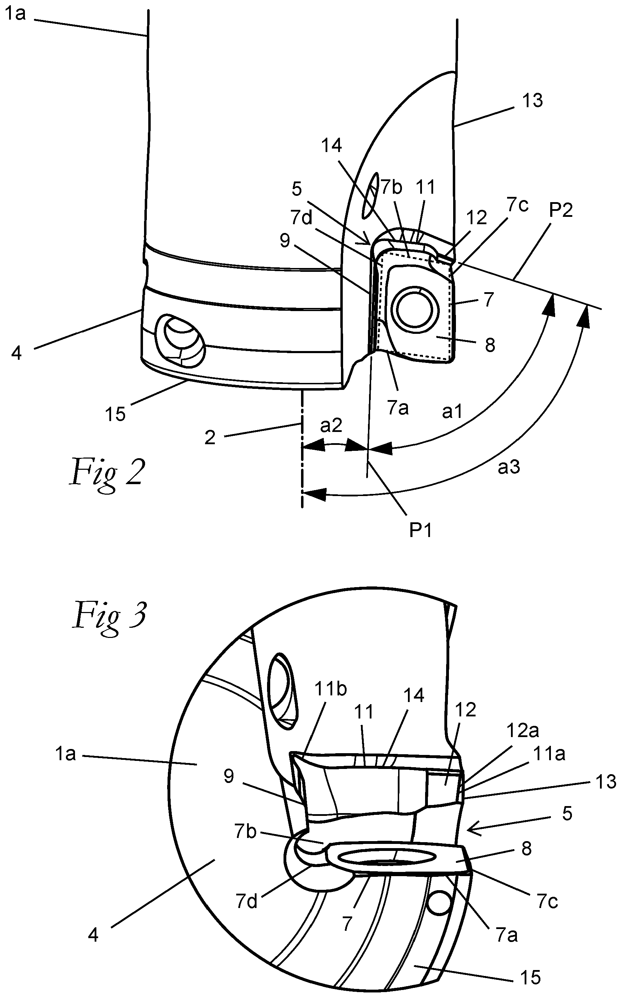

As seen in a top view (Fig. 2), the bottom section 7 of the pocket 5 has the shape of a parallelogram or at least substantially a parallelogram-shape. This does not mean that all sides of the parallelogram have to be exactly straight, as one example, but that the bottom section 7 of the pocket 5 has four sides and four inner corners, of which one pair of opposing corners have sharp angles and the other pair have obtuse angles, providing the bottom section with essentially the shape of a parallelogram. The bottom section 7 of the pocket 5 may be constituted by only one surface or an arbitrary number of sub-surfaces with various dimensions and/or mutual angles, together forming the bottom section. The bottom support surface 8, which is configured to provide support for a cutting insert 6 from a bottom side of the pocket 5, form part of the bottom section 7. However, the bottom section 7 may also comprise portions which are not designed to be in contact with a cutting insert, such as one or more recessed portions, which is also the case in the embodiment shown.

The pocket 5 further comprises a first side wall section 9 arranged at a radial inner end 7d of the bottom section 7, i.e. the inner end side thereof located farthest from an outer peripheral surface 13 of the tool body 1a in a radial direction, i.e. from the outer peripheral surface 13 towards the central longitudinal axis 2 of the tool body 1a. Accordingly, the first side wall section 9 defines a first side wall of the pocket 5, along the inner long side thereof, as seen in a radial direction. The first side wall section 9 has a front end 9a located at a front end 7a of the bottom section 7 and the pocket 5, and an opposite rear end 9b located at a rear end 7b of the bottom section 7 and the pocket 5, as seen in the direction of longitudinal extension of the tool body 1a from the rear 3 towards the front 4 end thereof.

The first side wall section 9 comprises a radial support surface 10 extending in a first plane P1 forming an angle of 70-110° with the bottom support surface 8. The radial support surface 10 is configured to provide support for a cutting insert 6 received in the pocket 5 in a radial direction by contact with a corresponding support surface on a long side of the insert. A front end 10a of the radial support surface 10 is arranged at the front end 9a of the first side wall section 9. From that front end 10a the radial support surface 10 continuously, i.e. uninterruptedly, stretches over more than 70% of the entire length of the first side wall section 9, measured between the front 9a and rear 9b ends thereof, i.e. from the front end 9a and over more than 70% of the length towards the rear end 9b of the first side wall section 9.

The pocket 5 further comprises a second side wall section 11 arranged at an axial rear end 7b of the bottom section 7, i.e. the rear or inner end side thereof located farthest from a front surface 15 of the tool body 1a, intended to face a workpiece to be machined during a cutting operation, in an axial direction, i.e. from the front end 4 towards the rear end 3 of the tool body 1a. Accordingly, the second side wall section 11 defines a second side wall of the pocket 5, along the rear, inner short side thereof, as seen in an axial direction. The second side wall section 11 has an inner end 11b by which it is connected to the rear end 9b of the first side wall section 9 so as to together form an inner corner of the pocket 5. The second side wall section 11 further has an opposite outer end 11a located closer to a peripheral surface 13 of the tool body 1a than the inner end 11b. Hence, the inner end 11b of the second side wall section 11 is located at an inner end 7d of the bottom section 7 and the outer end 11a of the second side wall section 11 is located at an outer end 7c of the bottom section, as seen in the radial direction of the tool body 1a.

The second side wall section 11 comprises an axial support surface 12 extending in a second plane P2 forming an angle of 70-110° with the bottom support surface 8. The axial support surface 12 is configured to provide support for a cutting insert 6 received in the pocket 5 in an axial direction by contact with a corresponding support surface on a short side of the insert. An outer end 12a of the axial support surface 12 is arranged at the outer end 11a of the second side wall section 11, i.e. at the transition between the pocket 5 and the outer peripheral surface 13 of the tool body 1a. From that outer end 12a the axial support surface 12 stretches over less than 25% of the entire length of the second side wall section 11, measured between the outer 11a and inner 11b ends thereof. That is, the axial support surface 12 extends from the outer end 11a of the second side wall section 11 towards the inner end 11b of the second side wall section 11 but ends at a radial distance to said inner end 11b corresponding to more than 75% of the entire length of the second side wall section 11.

The second side wall section 11 further comprises a part 14 recessed into the tool body 1a in a rearward direction relative to the axial support surface 12, as seen in the axial direction, or direction of longitudinal extension of the tool body, from the front 4 towards the rear 3 end thereof. Said recessed part 14 extends, from the inner end 11b of the second side wall section 11 towards the outer end 11a of the second side wall section 11, over more than 75% of the entire length of the second side wall section 11, measured between the outer 11a and inner 11b ends thereof. Hence, from the inner 11b to the outer 11a end of the second side wall section 11 this is essentially constituted by the recessed part 14 which spans over about 75-80% of the length and the axial support surface 12 which spans over the remaining 20-25% of the length of the second side wall section 11.

Accordingly, the pocket 5 defines by the bottom 7 and first 9 and second 11 side wall sections a mainly parallelepipedic space with an open top, front and outer long side, making it able and configured to receive a cutting insert 6 with a mainly parallelepipedic outer shape.

In a side view of the pocket 5 along the bottom support surface 8 and towards the first side wall section 9 the bottom support surface 8 forms an angle a4 of about 10° with the central longitudinal axis 2 of the tool body 1a (see Fig. 4). More specifically, the bottom support surface 8 is arranged such that the shortest distance between the bottom support surface 8 and the central longitudinal axis 2 of the tool body 1a decreases along the bottom support surface 8, from the rear end 7b towards the front end 7a thereof, as seen in the direction of longitudinal extension of the tool body 1a. In other words, the bottom support surface 8, and in fact the entire pocket 5, is tilted backwards as seen in the direction of intended rotation R of the tool body 1a and milling tool 100.

In a plane extending in parallel with the bottom support surface 8, the first plane P1 forms an angle a1 with the second plane P2 of 65-75° and preferably 68-72° (see Fig. 2). In the embodiment shown the angle a1 is approximately 70°.

If the central longitudinal axis 2 of the tool body 1a is projected orthogonally in the same plane, the first plane P1 is non-parallel with the projection of the central longitudinal axis 2. More specifically, in said plane the first plane P1 forms an angle a2 of 1-4°, preferably 1-2°, with the projection of the central longitudinal axis 2 and is located such that the shortest distance between the first plane P1 and the projection of the central longitudinal axis 2 in said plane decreases along the projection of the central longitudinal axis 2 in an axial forward direction, from the rear 3 towards the front end 4 of the tool body 1a. In other words, the radial support surface 9 is arranged to approach the central longitudinal axis 2 in a forward direction along the radial support surface 9, as seen in a top view of the pocket 5 straight towards the bottom support surface 8 thereof, as in Fig. 2.

In said plane extending in parallel with the bottom support surface 8 and in which the central longitudinal axis 2 of the tool body 1a is projected orthogonally, the second plane P2 further forms an angle a3 with the projection of the central longitudinal axis 2. The angle a3 is a1-5°≤a3<a1 and preferably a1-3°≤a3<a1, i.e. smaller than a1 by 3° at most.

When it is stated that a plane or surface forms a specific angle with another plane or surface this angle is the smallest angle that may be measured between these two planes or surfaces, if not otherwise stated.

In summary, a tool body 1a, 1b for a milling tool 100 is provided, which through its design of the pockets 5 in the tool body, and more specifically the dimensions, positioning and angles of the parts constituting each pocket, offers an advantageous positioning and a more stable securing of a cutting insert 6 detachably mounted in the pocket in question during use of the tool body 1a, 1b at a milling tool 100 in a cutting machining operation.

The long radial support surface 10 ensures a stable support for the insert 6 in the radial direction. The short axial support surface 12 and the large recessed part 14 in the second side wall section 11 promote the self-locking effect that the pocket design has on the insert. This as when axial forces act on the insert 6, the insert will be guided along the radial support surface 10, towards the axial support surface 12 and due to the angle, small size and positioning of the axial support surface into the recessed part, i.e. towards the inner corner of the pocket 5, where the first 9 and second 11 side wall sections meet. The large recessed part 14 ensures there is enough room for the cutting insert to move towards said inner corner. At the same time, the angles and mutual angular relationship between a1 and a3 result in a favorable trade-off between positioning for maximized locking and operational performance of the insert 6 in the pocket.

The invention is of course not in any way restricted to the embodiments thereof described above, but many modifications thereof may be made without departing from the scope of the invention as defined in the appended claims.

## Claims

1. A tool body (1a, 1b) for a milling tool (100), the tool body (1a, 1b) having a central longitudinal axis (2) extending between a rear end (3) and a front end (4) thereof and defining an axis of rotation of the milling tool (100), the tool body (1a, 1b) including at least one pocket (5) for receiving a cutting insert (6), the at least one pocket (5) comprising:
- a parallelogram-shaped bottom section (7) comprising a bottom support surface (8) arranged to face in a direction of intended rotation of the milling tool (100) around the central longitudinal axis (2) of the tool body (1a, 1b),
- a first side wall section (9) arranged at a radial inner end (7d) of the bottom section (7) and comprising a radial support surface (10) extending in a first plane (P1) forming an angle with the bottom support surface (8), and
- a second side wall section (11) arranged at an axial rear end (7b) of the bottom section (7) and comprising an axial support surface (12) extending in a second plane (P2) forming an angle with the bottom support surface (8), wherein, in a plane extending in parallel with the bottom support surface (8), the first plane (P1) forms an angle a1 with the second plane (P2),
***characterized* in that** a1 is 65-75°.

2. A tool body (1a, 1b) according to claim 1, ***characterized* in that** a1 is 68-72°.

3. A tool body (1a, 1b) according to claim 1 or 2, ***characterized* in that**, in a plane extending in parallel with the bottom support surface (8) and in which the central longitudinal axis (2) of the tool body (1a, 1b) is projected orthogonally, the first plane (P1) is non-parallel with the projection of the central longitudinal axis (2).

4. A tool body (1a, 1b) according to claim 3, ***characterized* in that**, in said plane extending in parallel with the bottom support surface (8) and in which the central longitudinal axis (2) of the tool body (1a, 1b) is projected orthogonally, the first plane (P1) forms an angle a2 with the projection of the central longitudinal axis (2) and is located such that the shortest distance between the first plane (P1) and the projection of the central longitudinal axis (2) of the tool body (1a, 1b) in said plane decreases along the projection of the central longitudinal axis (2) in a direction from the rear (3) towards the front end (4) of the tool body (1a, 1b), wherein a2 is 1-4°, preferably 1-2°.

5. A tool body (1a, 1b) according to any of the preceding claims, ***characterized* in that**, in a plane extending in parallel with the bottom support surface (8) and in which the central longitudinal axis (2) of the tool body (1a, 1b) is projected orthogonally, the second plane (P2) forms an angle a3 with the projection of the central longitudinal axis (2), wherein a1-5°≤a3<a1.

6. A tool body (1a, 1b) according to claim 5, ***characterized* in that** a1-3°≤a3<a1.

7. A tool body (1a, 1b) according to any of the preceding claims, ***characterized* in that** the first side wall section (9) has a front end (9a) and an opposite rear end (9b), located at a front end (7a) and a rear end (7b) of the bottom section (7), respectively, as seen in the direction of longitudinal extension of the tool body (1a, 1b), wherein a front end (10a) of the radial support surface (10) is arranged at the front end (9a) of the first side wall section (9).

8. A tool body (1a, 1b) according to claim 7, ***characterized* in that** the radial support surface (10) continuously stretches over at least 60%, preferably at least 70%, of the entire length of the first side wall section (9), measured between the front (9a) and rear (9b) ends thereof.

9. A tool body (1a, 1b) according to any of the preceding claims, ***characterized* in that** the second side wall section (11) has an inner end (11b) by which it is connected to the rear end (9b) of the first side wall section (9), and an opposite outer end (11a) located closer to a peripheral surface (13) of the tool body (1a, 1b) than the inner end (11b), wherein the inner end (11b) and outer end (11a) of the second side wall section (11) is located at an inner end (7d) and an outer end (7c) of the bottom section, respectively, as seen in a radial direction of the tool body (1a, 1b) transversely to the central axis (2), wherein an outer end (12a) of the axial support surface (12) is arranged at the outer end (11a) of the second side wall section (11).

10. A tool body (1a, 1b) according to claim 9, ***characterized* in that** the axial support surface (12) stretches over less than 30%, preferably less than 25%, of the entire length of the second side wall section (11), measured between the outer (11a) and inner (11b) ends thereof.

11. A tool body (1a, 1b) according to claim 9 or 10, ***characterized* in that** the second side wall section (11) further comprises a part (14) recessed into the tool body (1a, 1b) in a rearward direction relative to the axial support surface (12), as seen in the direction of longitudinal extension of the tool body (1a, 1b), wherein the recessed part (14) extends, from the inner end (11b) of the second side wall section (11) towards the outer end (11a) of the second side wall section (11), over at least 60%, preferably at least 70%, even more preferred at least 75% of the entire length of the second side wall section (11), measured between the outer (11a) and inner (11b) ends thereof.

12. A tool body (1a, 1b) according to any of the preceding claims, ***characterized* in that** in a side view of the pocket (5) along the bottom support surface (8) and towards the first side wall section (9) the bottom support surface (8) forms an angle a4 of 5-15°, preferably 8-12°, with the central longitudinal axis (2) of the tool body (1a, 1b), such that the shortest distance between the bottom support surface (8) and the central longitudinal axis (2) of the tool body (1a, 1b) decreases along the bottom support surface (8), from a rear end towards a front end thereof, as seen in the direction of longitudinal extension of the tool body (1a, 1b).

13. A tool body (1a, 1b) according to any of the preceding claims, ***characterized* in that** the tool body (1a, 1b) is a tool body (1a, 1b) for a square shoulder milling tool (100).

14. A tool body (1a, 1b) according to any of the preceding claims, ***characterized* in that** the at least one pocket (5) defines a mainly parallelepipedic space.

15. A milling tool (100) comprising a tool body (1a) according to any of the claims 1-14 as well as at least one cutting insert (6) detachably mounted in the at least one pocket (5) thereof.
